# EUROPÄISCHE PATENTANMELDUNG

(11) **EP 4 029 626 A1**
(43) Veröffentlichungstag der Anmeldung: **20.07.2022**
(21) Anmeldenummer: 22150442.6
(22) Anmeldetag: 06.01.2022
(51) Int. Cl.: B21K 1/76, B62D 3/12, B62D 5/04

(54) **ZAHNSTANGE UND VERFAHREN ZUR HERSTELLUNG EINER ZAHNSTANGE FÜR EIN LENKGETRIEBE EINES KRAFTFAHRZEUGS**

(30) Priorität: 13.01.2021 DE 102021200246
(71) Anmelder: thyssenkrupp Presta Aktiengesellschaft, 9492 Eschen (LI); thyssenkrupp AG, 45143 Essen (DE)
(72) Erfinder: Dohmann, Jürgen, 14548 Schwielowsee OT Caputh (DE); Pietruschka, Bernhard, 39576 Stendal (DE)
(74) Vertreter: thyssenkrupp Intellectual Property GmbH

(57) **Zusammenfassung**

Die vorliegende Erfindung betrifft ein Verfahren zur Herstellung einer Zahnstange (3) für ein Lenkgetriebe eines Kraftfahrzeugs, die eine in einer Längsrichtung axial erstreckte Längsachse (L) aufweist und die mindestens zwei sich axial erstreckende Verzahnungsabschnitte (31, 32) mit jeweils einer Verzahnung aufweist, wobei die Verzahnungsabschnitte (31, 32) axial über einen Verbindungsabschnitt (33) miteinander verbunden sind und bezüglich Rotation um die Längsachse (L) um einen definierten Winkelversatz (ϕ) relativ zueinander verdreht angeordnet sind. Um einen geringeren Herstellungsaufwand zu ermöglichen, schlägt die Erfindung die Schritte vor:
- Bereitstellen eines einstückigen Rohlings (301),
- Erzeugen der zwei Verzahnungsabschnitte (31, 32) an dem Rohling (301) in einer Grundausrichtung relativ zueinander,

Verdrehen der Verzahnungsabschnitte (31, 32) relativ zueinander um die Längsachse (L), wobei der Verbindungsabschnitt (33) plastisch tordiert wird zur Erzeugung des Winkelversatzes (ϕ).

## Beschreibung

### Stand der Technik

Die Erfindung betrifft ein Verfahren zur Herstellung einer Zahnstange für ein Lenkgetriebe eines Kraftfahrzeugs, die eine in einer Längsrichtung axial erstreckte Längsachse aufweist und die mindestens zwei sich axial erstreckende Verzahnungsabschnitte mit jeweils einer Verzahnung aufweist, wobei die Verzahnungsabschnitte axial über einen Verbindungsabschnitt miteinander verbunden sind und bezüglich Rotation um die Längsachse um einen definierten Winkelversatz relativ zueinander verdreht angeordnet sind. Eine gemäß dem Verfahren hergestellt Zahnstange sowie ein Lenkgetriebe und eine Kraftfahrzeug-Lenkung sind ebenfalls Gegenstand der Erfindung.

In einer als Zahnstangenlenkung ausgebildeten Fahrzeuglenkung wird ein Lenkbefehl als Drehbewegung in die Lenkwelle eingebracht, auf der ein Ritzel angebracht ist, welches mit einer Verzahnung einer Zahnstange in einem Lenkgetriebe kämmt. Die Zahnstange ist in einem Lenkgetriebe in axialer Richtung, d.h. in Richtung ihrer Längsachse verschiebbar gelagert, so dass eine Drehung des Ritzels in eine translatorische Bewegung der Zahnstange in deren Längsrichtung umgesetzt wird. An der Zahnstange sind Spurstangen befestigt, welche mit den Achsschenkeln der zu lenkenden Räder verbunden sind, wo die translatorische Bewegung der Zahnstange in einen Lenkeinschlag der Räder umgesetzt wird.

In einer einfachen Bauform weist die Zahnstange einen einzigen, in Richtung der Längsachse, d.h. axial erstreckten Verzahnungsabschnitt mit einer Vielzahl von quer dazu verlaufenden Zähnen auf, und das darin eingreifende Ritzel wird zusammen mit der Lenkwelle über ein Lenkrad manuell rotiert, wobei die manuelle Drehung durch einen motorischen Hilfskraftantrieb der Lenkwelle unterstützt sein kann. Alternativ kann in einem Steer-by-Wire-Lenksystem das Ritzel von einem elektrischen Stellantrieb angetrieben werden, der seinerseits durch elektrische Steuersignale einer manuellen Lenkeingabe oder automatisiert angesteuert wird, beispielsweise beim autonomen Fahren durch extern vorgegebene und/oder automatisiert durch eine Sensorik bereitgestellte und übermittelte Steuersignale.

In der gattungsgemäßen Bauform weist die Zahnstange einen zweiten Verzahnungsabschnitt auf, der mit dem besagten ersten Verzahnungsabschnitt axial versetzt verbunden ist, wie im Stand der Technik beispielsweise in der DE 10 2016 212 303 A1 beschrieben. In den zweiten Verzahnungsabschnitt kann über ein zweites Ritzel, welches auf einer motorisch drehend antreibbaren Antriebswelle eines motorischen Hilfskraftantriebs angebracht ist, eine Hilfskraft in Längsrichtung in die Zahnstange eingekoppelt werden. Die beiden Verzahnungsabschnitte sind über einen Verbindungsabschnitt fest miteinander verbunden.

Um den zur Verfügung stehenden Bauraum besser ausnutzen zu können, ist es bekannt, dass die beiden Verzahnungsabschnitte in Umfangsrichtung, also bezüglich Rotation um die Längsachse, um einen definierten Winkelversatz von größer 0° versetzt angeordnet sind. Dadurch kann zur Anpassung an den Bauraum beispielsweise die Antriebswelle eines Hilfskraftantriebs in einem Winkel zwischen 0° und 180° versetzt zur Lenkwelle winklig angeordnet sein.

In der DE 10 2016 212 303 A1 kann der Winkelversatz dadurch vorgegeben werden, dass die beiden Verzahnungsabschnitte auf separat vorgefertigten ersten und zweiten Zahnstangensegmenten bereitgestellt werden, die in einem weiteren Verfahrensschritt in einem Verbindungsabschnitt in der für den Winkelversatz geforderten Winkelorientierung zusammengefügt werden, beispielsweise mittels Verschweißen oder anderer Fügeverfahren. Vorteilhaft dabei ist, dass der Betrag des Winkelversatzes konstruktiv einfach vorgegeben werden kann. Die Vorfertigung der separaten Zahnstangensegmente und das anschließende Fügen bedingen jedoch mehrere Fertigungsschritte mit einem entsprechend hohen Fertigungsaufwand. Insbesondere das Fügen kann wegen der im Betrieb zu erwartenden Belastungen und der geforderten engen Toleranzen relativ aufwendig sein. Weiterhin entsteht an der Fügestelle ein radial überstehender Grat, der aufgrund immer höherer Bauraumanforderungen mittels spanender Bearbeitung entfernt werden muss. Dazu ist eine zusätzliche Umspannoperation auf eine andere Fertigungsmaschine erforderlich. Dies ist zeitaufwendig und teuer.

Angesichts der vorangehend erläuterten Problematik ist es eine Aufgabe der vorliegenden Erfindung, einen geringeren Herstellungsaufwand bei einer gattungsgemäßen Zahnstange zu ermöglichen und bei der gleichzeitig keine Entfernung eines Fügegrats erforderlich ist.

### Darstellung der Erfindung

Diese Aufgabe wird erfindungsgemäß gelöst durch ein Verfahren entsprechend dem Anspruch 1, sowie durch eine Zahnstange mit den Merkmalen des Anspruchs 15, ein Lenkgetriebe gemäß Anspruch 17, und ein Kraftfahrzeug-Lenksystem gemäß Anspruch 18. Vorteilhafte Weiterbildungen ergeben sich aus den Unteransprüchen.

Ein Verfahren zur Herstellung einer Zahnstange für ein Lenkgetriebe eines Kraftfahrzeugs, die eine in einer Längsrichtung axial erstreckte Längsachse aufweist und die mindestens zwei sich axial erstreckende Verzahnungsabschnitte mit jeweils einer Verzahnung aufweist, wobei die Verzahnungsabschnitte axial über einen Verbindungsabschnitt miteinander verbunden sind und bezüglich Rotation um die Längsachse um einen definierten Winkelversatz relativ zueinander verdreht angeordnet sind, umfasst erfindungsgemäß die Schritte:
- Bereitstellen eines einstückigen Rohlings,
- Erzeugen der zwei Verzahnungsabschnitte an dem Rohling in einer Grundausrichtung relativ zueinander,
- Verdrehen der Verzahnungsabschnitte relativ zueinander um die Längsachse, wobei der Verbindungsabschnitt plastisch tordiert wird zur Erzeugung des Winkelversatzes.

Im Unterschied zu dem im Stand der Technik separat gefertigten und nachträglich gefügten Zahnstangensegmenten geht das erfindungsgemäße Verfahren von einem einstückigen Rohling aus. In diesen Rohling - beispielsweise einem metallischen Rohmaterial oder Halbzeug wie einem Rund- oder Profilmaterialabschnitt aus Stahl oder einem anderen bevorzugt metallischen Werkstoff - werden mittels geeigneter plastischer und/oder spanender Bearbeitungsverfahren mindestens zwei Verzahnungsabschnitte eingebracht, nämlich ein erster und ein zweiter Verzahnungsabschnitt. Dadurch wird aus dem einstückigen Rohling ein ebenfalls einstückiger, axial durchgehender Zahnstangenrohling erzeugt, der axial hintereinander angeordnet beide Verzahnungsabschnitte aufweist. Zwischen den zwei Verzahnungsabschnitten befindet sich der Verbindungsabschnitt, der ebenfalls einstückig mit dem Zahnstangenrohling ausgebildet ist. Ein weiterer Vorteil gegenüber dem Stand der Technik ist, dass keine Entfernung eines Fügegrats mittels einer zusätzlichen Zerspanungsoperation erforderlich ist, so dass das erfindungsgemäße Verfahren Zeit und Kosten spart.

Bevorzugt sind die Verzahnungsabschnitte axial beabstandet, wobei der Abstand mit der Länge des Verbindungsabschnitts korrespondiert.

Bevorzugt wird der Verbindungsabschnitt, während dieser plastisch tordiert wird, in seiner Länge - gemessen in Richtung der Längsachse - nicht verkürzt, sprich die Länge ist vor und nach dem Tordieren gleich.

Die zwei Verzahnungsabschnitte werden an dem Zahnstangenrohling in einer Grundausrichtung erzeugt. Diese Grundausrichtung bezeichnet eine vorläufige relative Winkelorientierung der Verzahnungsabschnitte an dem Zahnstangenrohling, die nicht mit dem endgültigen definierten Winkelversatz an der fertigen Zahnstange übereinstimmt. Dadurch kann eine fertigungstechnische Optimierung dahingehend erfolgen, dass in der vorläufigen Winkelorientierung der Grundausrichtung eine rationelle Erzeugung beider Verzahnungen an dem Zahnstangenrohling erfolgen kann, beispielsweise durch Umformung in einem Bearbeitungsschritt, bevorzugt gleichzeitig oder zumindest in einer Umformeinrichtung, vorzugsweise ohne Umspannen des Rohlings.

Bevorzugt ist vorgesehen, dass die Verzahnungsabschnitte in der Grundausrichtung relativ zueinander bezüglich der Längsachse unverdreht sind. In dieser sogenannten unverdrehten Grundausrichtung befinden sich die Verzahnungsabschnitte bezüglich der Längsachse auf derselben Seite auf dem Außenumfang des Zahnstangenrohlings, und haben dabei im Wesentlichen dieselbe Umfangsorientierung. Damit ist gemeint, dass sie in Längsrichtung fluchten, d.h. in einem Grundwinkel von 0° +/- 1°, bevorzugt +/- 0,5°, relativ zueinander liegen.

Ein besonderer Vorteil der unverdrehten Grundausrichtung ist, dass eine optimierte Erzeugung der Verzahnungen durch plastische Umformverfahren erfolgen kann, beispielsweise durch Gesenkschmieden, Pressen oder dergleichen. Vorteilhaft kann dabei die Einformung der zwei Verzahnungsabschnitte in einem Formwerkzeug, bevorzugt einem zweiteiligen Gesenk, gleichzeitig und rationell in einem Umformvorgang erfolgen. Durch die einseitige Anordnung beider Verzahnungen kann das Formwerkzeug mit relativ geringem Aufwand und kostengünstig bereitgestellt werden, wodurch der Fertigungsaufwand reduziert wird.

In Längsrichtung zwischen den Verzahnungsabschnitten weist der Zahnstangenrohling den Verbindungsabschnitt auf, der eine definierte axiale Länge hat, welche bevorzugt dem Abstand der Verzahnungsabschnitte entspricht. Im Bereich des Verbindungsabschnitts kann der Rohling beim Erzeugen der Verzahnungen unverformt bleiben. Es kann auch vorteilhaft sein, dass der Rohling vor, zusammen mit oder nach der Erzeugung der Verzahnungsabschnitte ebenfalls umgeformt wird, beispielsweise durch plastische Umformung und/oder spanende Bearbeitung, um beispielsweise vorgegebene Abmessungen und/oder Querschnittsformen des Verbindungsabschnitts an dem Zahnstangenrohling auszubilden.

Bevorzugt kann zur Erzeugung des Zahnstangenrohlings eine plastische Warm- oder Kaltumformung erfolgen, beispielsweise mittels Gesenkschmieden, Pressen oder dergleichen. Vorteilhaft bei einer derartigen Umformung ist, dass eine optimierte Anpassung an die nachfolgenden Verfahrensschritte erfolgen kann. Dabei haben plastische Umformverfahren den weiteren Vorteil, dass eine optimierte Gefügestruktur erzeugt werden kann, die eine hohe Festigkeit und gute weitere Verformbarkeit ermöglicht.

In einem folgenden Schritt wird der Zahnstangenrohling ausgehend von der Grundausrichtung tordiert, also in sich verdreht oder verdrillt. Dies erfolgt durch Verdrehen der Verzahnungsabschnitte relativ zueinander um die Längsachse, wobei der Verbindungsabschnitt plastisch tordiert wird zur Erzeugung des Winkelversatzes der Verzahnungsabschnitte. Dadurch werden die beiden Verzahnungsabschnitte in Umfangsrichtung um den Winkelversatz relativ zueinander positioniert.

Ausgehend von der Grundausrichtung kann mit Vorteil vorgesehen sein, dass durch das gegenseitige Verdrehen der Verzahnungsabschnitte ein Winkelversatz von mehr als 10° erzeugt wird. Darüber hinaus ist es ebenfalls denkbar und möglich, dass durch das Verdrehen der Verzahnungsabschnitte ein Winkelversatz von mehr als 45° erzeugt wird. Dabei ist ein Vorteil des erfindungsgemäßen Verfahrens, dass der Betrag des Winkelversatzes mit geringem Aufwand an unterschiedliche konstruktive und bauliche Gegebenheiten von Lenkgetrieben angepasst werden kann, insbesondere bis zu einem Winkelversatz von 180°.

In einer vorteilhaften Weiterbildung erfolgt zwischen dem Schritt des Erzeugens der zwei Verzahnungsabschnitte an dem Rohling in einer Grundausrichtung relativ zueinander und dem Schritt des Verdrehens der Verzahnungsabschnitte relativ zueinander um die Längsachse, wobei der Verbindungsabschnitt plastisch tordiert wird zur Erzeugung des Winkelversatzes, kein weiterer Verfahrensschritt, der den Rohling derart auftrennt, dass die Verzahnungsabschnitt nicht mehr einem integralen Bauteil angehören. Mit anderen Worten erfolgt das Erzeugen und das gegenseitige Verdrehen der Verzahnungsschritte bevorzugt direkt im Anschluss aneinander an einem einstückigen Bauteil.

Es kann bevorzugt vorgesehen sein, dass zum Verdrehen die Verzahnungsabschnitte mit einem relativen Torsionsmoment oberhalb der elastischen Verformungsgrenze des Verbindungsabschnitts beaufschlagt werden. Konkret kann dazu der eine Verzahnungsabschnitt fest eingespannt werden, und der andere Verzahnungsabschnitt relativ dazu durch Beaufschlagung mit einem Torsionsmoment um die Längsachse rotiert werden. Dadurch, dass das Torsionsmoment größer ist als die elastische Torsionssteifigkeit des Verbindungsabschnitts wird dessen elastische Verformung überschritten und eine plastische Torsion im Bereich des Verbindungsabschnitts erzeugt, d.h. dieser wird dauerhaft in sich verdreht. Die Verdrehung wird so weit fortgesetzt, bis der für die Zahnstange vorgegebene Winkelversatz der zwei Verzahnungsabschnitte erreicht und durch die erzeugte plastische Torsionsdeformation dauerhaft ausgebildet ist. Die Verdrehung kann in vorteilhafter Weise mit geringerem Aufwand als das Fügen im Stand der Technik realisiert werden.

Nach dem Erreichen des vorgegebenen Winkelversatzes erfolgt das Lösen des Torsionsmoments, bei dem die Beaufschlagung mit dem Torsionsmoment beendet wird. Dabei ist der Winkelversatz der Verzahnungsabschnitte bleibend fixiert.

Vorzugsweise kann vorgesehen sein, dass der Verbindungsabschnitt eine axiale Länge von weniger als 30% und/oder mehr als 2%, bevorzugt mehr als 5% der Zahnstangenlänge hat. Der Verbindungsabschnitt kann beim erfindungsgemäßen Verdrehen im Ganzen, über seine gesamte axiale Länge, oder auch nur über einen Teil seiner Länge tordiert werden. Dadurch, dass die Länge des Verbindungsabschnitts bevorzugt zwischen 5% und 30% der gesamten axialen Zahnstangenlänge gemessen über die äußeren Enden der Verzahnungsabschnitte beträgt, kann sichergestellt werden, dass die beim Tordieren im Material auftretende Scherung jederzeit unterhalb potentiell kritischer Werte bleibt, und gleichzeitig eine hinreichende axiale Länge der Verzahnungsabschnitte bei einer begrenzten Baulänge möglich ist.

Um eine reproduzierbar hohe Genauigkeit des Winkelversatzes sicherzustellen, kann es vorteilhaft sein, dass beim Verdrehen zusätzlich zum Winkelversatz ein Zuschlagwinkel aufgebracht wird, welcher einer elastischen Rückfederung des Verbindungsabschnitts beim Lösen des Torsionsmoments entspricht. Damit kann berücksichtigt werden, dass beim Verdrehen neben der plastischen Verformung auch eine elastische Verformung auftritt, die beim Beenden der Beaufschlagung mit dem Torsionsmoment zu einer elastischen Rückfederung bzw. Rückstellung führt, wodurch der tatsächlich erzeugte dauerhafte Winkelversatz kleiner ist als der beim Verdrehen aufgebrachte Torsionswinkel. Die potentielle Abweichung durch die Rückfederung kann dadurch wirksam ausgeglichen werden, dass die Zahnstangenbereiche nach Errreichen des Betrags des Winkelversatzes um den Zuschlagwinkel weiter verdreht werden, wobei der Betrag des Zuschlagwinkels an den negativen Betrag der elastischen Rückverformung angepasst wird. Dieser kann empirisch bestimmt werden, oder aus den spezifischen Verformungseigenschaften des Materials und den Abmessungen des Verbindungsabschnitts berechnet werden.

Bei der Verdrehung wird sichergestellt, dass die Torsion ausschließlich im Bereich des Verbindungsabschnitts erfolgt, so dass die Verzahnungsabschnitte unverformt bleiben, d.h. keine merkliche plastische Torsion der Verzahnungsabschnitte erfolgt. Dies kann durch die Art der Einspannung unmittelbar beiderseits des Verbindungsabschnitts erfolgen, und zusätzlich oder alternativ dadurch, dass die Verzahnungsabschnitte einen größeren Querschnitt bzw. beim Umformen eine höhere Torsionssteifigkeit haben, so dass durch das zur plastischen Umformung des Verbindungsabschnitts aufgebrachte Torsionsmoment keine plastische Deformation der Verzahnungsabschnitte bewirkt.

Die erfindungsgemäße plastische Torsion kann zuverlässig und rationell erfolgen, wobei der Fertigungsaufwand geringer ist als bei dem im Stand der Technik beschriebenen Fügen zweier separater Zahnstangensegmente.

Es kann mit Vorteil vorgesehen sein, dass vor dem Verdrehen der Verzahnungsabschnitte der Verbindungsabschnitt auf eine Umformtemperatur vorgewärmt wird. Die Umformtemperatur wird an das Material der Zahnstange, vorzugsweise Stahl, angepasst zur Erzeugung einer Warmumformung. Dabei kann mittels partieller Erwärmung im Bereich des Verbindungsabschnitts eine lokale thermische Materialerweichung erzeugt werden, wodurch die elastische Verformungsgrenze so weit herabgesetzt werden kann, dass eine dauerhafte plastische Umformung mittels eines relativ geringen aufgebrachten Torsionsmoments ermöglicht wird. Dadurch, dass dabei die Verzahnungsabschnitte unterhalb der Umformtemperatur gehalten werden, kann sichergestellt werden, dass die Torsion ausschließlich im Bereich des Verbindungsabschnitts erfolgt.

Die Erwärmung kann lokal im Bereich des Verbindungsabschnitts beispielsweise induktiv erfolgen, oder mittels anderer geeigneter Verfahren.

Ein Vorteil der Warmumformung ist, dass im Bereich des Verbindungsabschnitts in Längsrichtung schraubenförmig ununterbrochen durchgehende Gefügelinien ausgebildet werden, wodurch eine hohe Festigkeit erzeugt wird, so dass eine hohe Belastbarkeit bereits bei kleineren Materialquerschnitten ermöglicht wird.

Ein weiterer Vorteil der Warmumformung ist, dass der Anteil der elastischen Rückfederung relativ gering gehalten werden kann, so dass der durch plastische Torsion realisierte tatsächliche Winkelversatz relativ nahe an dem beim Verdrehen aufgebrachten Torsionswinkel liegt, wodurch elastische Rückstelleffekte einfacher ausgeglichen werden können, um die Reproduzierbarkeit und Fertigungsgenauigkeit zu erhöhen.

Bevorzugt kann die Zahnstange aus einem gut zur Warmumformung geeigneten Stahl gefertigt werden. Dies ermöglicht wie zuvor beschrieben eine optimierte Torsion des Verbindungsabschnitts. Außerdem wird dadurch mit Vorteil ermöglicht, dass mindestens ein Verzahnungsabschnitt durch Urformen und/oder Umformen, bevorzugt durch nichtspanende, plastische Umformung, erzeugt wird, beispielsweise durch Warmumformung.

Alternativ oder zusätzlich ist es möglich, dass der Rohling und/oder der Zahnstangenrohling mittels Kalt- oder Halbwarmumformen plastisch deformiert werden, beispielsweise durch Pressen oder dergleichen. Dadurch können spezielle Werkstoff- und Werkstückparameter gezielt beeinflusst werden

Weiterhin ist es alternativ oderzusätzlich möglich, dass der Rohling und/oder der Zahnstangenrohling und/oder die Zahnstange trennend, insbesondere spanend bearbeitet werden. Beispielsweise kann mindestens ein Verzahnungsabschnitt durch spanende Bearbeitung, insbesondere mit einer geometrisch bestimmten Schneide erzeugt werden, wie Fräsen, Wälzfräsen, Hobeln, Räumen, Schleifen oder dergleichen. Dabei ist es denkbar und möglich, derartige spanende Verfahren zur Feinbearbeitung nach einer plastischen Umformung anzuwenden.

Es ist weiterhin möglich, dass vor, während oder nach dem Verdrehen die Verzahnungsabschnitte axial und/oder quer zur Längsachse relativ zueinander ausgerichtet werden. Durch eine entsprechende axiale Relativbewegung der Verzahnungsabschnitte kann beispielsweise eine beim Verdrehen durch die Torsion eventuell auftretende Axialverformung ausgeglichen werden, um den axialen Abstand der Verzahnungsabschnitte zu justieren. Zusätzlich oder alternativ können die Achsen der Verzahnungsabschnitte mit der Längsachse übereinstimmend ausgerichtet werden, gegebenenfalls auch parallel dazu mit einem vorgegebenen Versatz quer zur Längsachse, auch als Offset bezeichnet. Dadurch kann ein ansonsten eventuell erforderlicher Verfahrensschritt zum Richten der Zahnstange entfallen, wodurch der Fertigungsaufwand in vorteilhafter Weise weiter reduziert werden kann. Mit Vorteil kann das relative Ausrichten beim Warmumformen des Verbindungsabschnitts erfolgen, wobei eine präzise dauerhafte Ausrichtung mittels relativ kleiner Stellkräfte möglich ist.

Es kann vorgesehen sein, dass die Verzahnungsabschnitte unterschiedlich ausgebildet sind. Die Verzahnungen können sich zur Anpassung an unterschiedliche Übertragungseigenschaften, an Form und Abmessungen des zur Verfügung stehenden Bauraums und dergleichen bezüglich Abmessung, Orientierung, Verzahnungstyp, Zahnweite und -orientierung und dergleichen unterscheiden.

Es ist weiterhin möglich, dass an der Zahnstange mindestens ein weiterer Funktionsabschnitt umfasst ausgebildet oder angebracht wird. Ein weiterer Funktionsabschnitt kann beispielsweise einen Gewindeabschnitt und/oder einen Lagerabschnitt und/oder einen Befestigungsabschnitt oder dergleichen umfassen, beispielsweise zur Einkopplung einer Hilfskraft über einen Gewindetrieb, zur Ankopplung an Spurstangen der Lenkung, zur Lagerung der Zahnstange im Lenkgetriebe oder dergleichen. Ein oder mehrere Funktionsabschnitte können durch plastische Umformung und/oder spanende Bearbeitung einstückig mit der Zahnstange ausgebildet sein, oder zusätzlich oder alternativ damit verbunden sein, durch unlösbare Fügeverfahren wie Schweißen oder dergleichen, oder andere Verbindungsmittel.

Verfahren nach einem der vorangehenden Ansprüche, dadurch gekennzeichnet, dass der Rohling als Stangen- oder Profilabschnitt bereitgestellt wird. Bevorzugt kann das Rohmaterial Stangen- oder Profilmaterial sein, beispielsweise Stahl-Rundmaterial, von dem Rohlinge als Abschnitte abgelängt werden. Der Stangen- oder Profilabschnitt kann als Vollprofil oder als Hohlprofil, beispielsweise als Rohr, ausgebildet sein. Dadurch wird eine flexible und kostengünstige Fertigung ermöglicht.

Die Erfindung umfasst weiterhin eine Zahnstange für ein Lenkgetriebe eines Kraftfahrzeugs, die eine in einer Längsrichtung axial erstreckte Längsachse aufweist und die mindestens zwei sich axial erstreckende Verzahnungsabschnitte mit jeweils einer Verzahnung aufweist, wobei die Verzahnungsabschnitte axial über einen Verbindungsabschnitt miteinander verbunden sind und bezüglich Rotation um die Längsachse um einen definierten Winkelversatz relativ zueinander verdreht angeordnet sind, bei der erfindungsgemäß vorgesehen ist, dass die Verzahnungsabschnitte und der Verbindungsabschnitt einstückig ausgebildet sind, wobei der Verbindungsabschnitt um die Längsachse plastisch tordiert ausgebildet ist.

Die erfindungsgemäße Zahnstange kann bevorzugt nach dem vorangehend beschriebenen erfindungsgemäßen Verfahren hergestellt sein. Dabei können sämtliche oben beschriebenen Merkmale einzeln oder in Kombinationen realisiert sein.

Durch die plastische Tordierung werden im Bereich des Verbindungsabschnitts schraubenförmig um die Längsachse gewundene Gefügelinien realisiert, welche eine zwischen den axial verlaufenden Gefügen der beiden Verzahnungsabschnitte unterbrechungsfrei durchgehende Gefügestruktur bilden. Diese hat eine besonders hohe Festigkeit und sorgt für eine hohe Steifigkeit der Zahnstange, was vorteilhaft ist im Hinblick auf Laufruhe, Verschleiß und Betriebssicherheit. Dabei kann der Fertigungsaufwand reduziert werden.

Es kann insbesondere vorteilhaft sein, dass zumindest ein Verzahnungsabschnitt und/oder der Verbindungsabschnitt ein Warmumformteil aufweisen.

Ein erfindungsgemäßes Lenkgetriebe für ein Kraftfahrzeug umfasst eine erfindungsgemäße Zahnstange mit zwei Verzahnungsabschnitten wie vorangehend beschrieben, mit einem ersten Verzahnungsabschnitt und einem zweiten Verzahnungsabschnitt, die axial in Längsrichtung verschiebbar in einem Getriebegehäuse gelagert ist, wobei ein in dem Getriebegehäuse drehbar gelagertes erstes Ritzel in den ersten Verzahnungsabschnitt eingreift und ein in dem Getriebegehäuse drehbar gelagertes zweites Ritzel in den zweiten Verzahnungsabschnitt eingreift. Eines der Ritzel kann bevorzugt an einer Lenkwelle angebracht sein, oder an der Antreibswelle eines Stellantriebs eines Steer-by-Wire-Lenksystems. Das andere Ritzel kann an einer Antriebswelle eines Hilfskraftantriebs angebracht sein.

Ein Kraftfahrzeug-Lenksystem weist erfindungsgemäß ein Lenkgetriebe der genannten Art mit einer erfindungsgemäßen Zahnstange auf.

### Beschreibung der Zeichnungen

Vorteilhafte Ausführungsformen der Erfindung werden im Folgenden anhand der Zeichnungen näher erläutert. Im Einzelnen zeigen:
- Figur 1: ein erfindungsgemäßes Kraftfahrzeug-Lenksystem in einer schematischen Darstellung,
- Figur 2: ein erfindungsgemäßes Lenkgetriebe eines Lenksystems gemäß Figur 1 in einer schematischen perspektivischen Darstellung,
- Figur 3: eine schematische Ansicht quer zur Längsachse eines Gesenks in geöffnetem Zustand mit einem Rohling, vor der Umformung,
- Figur 4: das Gesenk wie in Figur 3 in einem nachfolgenden Verfahrensschritt in geschlossenem Zustand während des Umformens des Rohlings in einen Zahnstangenrohling,
- Figur 5: das Gesenk wie in Figur 3 in einem nachfolgenden Verfahrensschritt in geöffnetem Zustand mit einem Zahnstangenrohling,
- Figur 6: einen Zahnstangenrohling wie in Figur 5 vor dem Verdrehen in einer schematischen perspektivischen Ansicht,
- Figur 7: eine aus dem Zahnstangenrohling gemäß Figur 5 durch Verdrehen hergestellte fertige Zahnstange, gemäß Figur 1.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

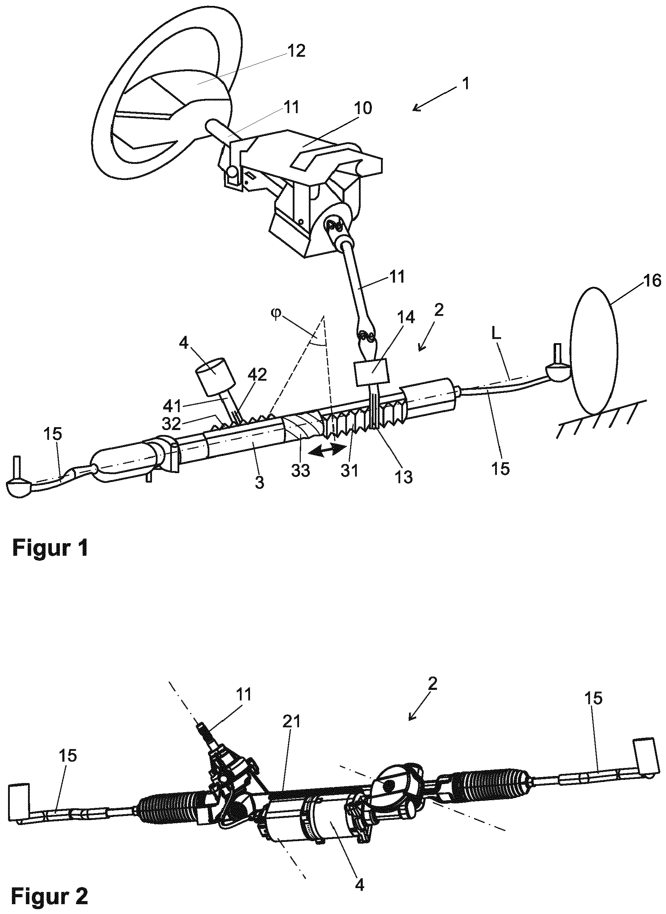

Figur 1 zeigt Figur 1 zeigt eine schematische perspektivische Darstellung eines Kraftfahrzeug-Lenksystems 1 mit einer Trageinheit 10, die an einem nicht dargestellten Fahrzeugkarosserie anbringbaren, und in der eine Lenkwelle 11 drehbar gelagert ist.

An dem in Fahrtrichtung hinteren Ende ist an der Lenkwelle 11 ein Lenkrad 12 zur Einbringung manueller Lenkbefehle durch Drehung der Lenkwelle 11 angebracht. Am vorderen Ende der Lenkwelle 11 ist ein Ritzel 13 angebracht.

An der Lenkwelle 11 kann ferner ein Hilfskraftantrieb 14 vorgesehen sein, der abhängig von dem in das Lenkrad 12 eingebrachten manuellen Lenkmoment ein unterstützendes Hilfsmoment in die Lenkwelle 11 einkoppelt. Der Hilfskraftantrieb 14 kann in an sich bekannter Weise einen elektromotorischen Stellantrieb umfassen, der direkt oder über ein Getriebe mit der Lenkwelle 11 gekuppelt ist.

Ein Lenkgetriebe 2, welches in Figur 2 separat perspektivisch dargestellt ist, weist ein Gehäuse 21 auf, welches in Figur 1 zur besseren Übersicht weggelassen ist.

Das Lenkgetriebe 2 weist eine in ihrer Grundform stangenförmige, erfindungsgemäße Zahnstange 3 auf, die sich in Richtung ihrer Längsachse L axial, d.h. in ihrer Längsrichtung erstreckt. Die Zahnstange 3 ist in dem Gehäuse 21 in Längsrichtung verschieblich gelagert, wie mit dem Doppelpfeil angedeutet ist.

Die beiden äußeren Enden der Zahnstange 3 sind über Spurstangen 15 mit den Achsschenkeln lenkbarer Räder 16 verbunden.

Die Zahnstange 3 ist einstückig ausgebildet und weist zwei Verzahnungsabschnitte 31, 32 auf, nämlich einen ersten Verzahnungsabschnitt 31 und zweiten Verzahnungsabschnitt 32, die bezüglich der Längsachse L in Umfangsrichtung um einen Winkelversatz ϕ versetzt angeordnet sind. Mit anderen Worten ist der erste Verzahnungsabschnitt 31 relativ zum zweiten Verzahnungsabschnitt 32 um den Winkelversatz ϕ verdreht angeordnet.

Die zwei Verzahnungsabschnitte 31, 32 sind über einen erfindungsgemäßen Verbindungsabschnitt 33 miteinander verbunden. Der Verbindungsabschnitt 33 hat eine Länge v, die bevorzugt zwischen 2% und 30% der gesamten Zahnstangelänge gemessen in Längsrichtung über die äußeren Enden der Verzahnungsabschnitte 31, 32 beträgt, und ist erfindungsgemäß um einen Winkelversatz ϕ um die Längsachse L tordiert ausgebildet. Dieser Winkelversatz ϕ kann vorzugsweise zwischen 10° und 45° betragen.

An dem Lenkgetriebe 2 ist ein Hilfskraftantrieb 4 angebracht, mit einem elektrischen Stellantrieb, von dem eine Antriebswelle 41 drehend antreibbar ist, An der Antriebswelle 41 ist ein Ritzel 42 angebracht, welches in den zweiten Verzahnungsabschnitt 32 eingreift.

Durch den Hilfskraftantrieb 4 kann die Zahnstange 3 nach demselben Wirkprinzip axial verlagert werden, wie oben für die Lenkwelle 11 beschrieben. Es ist auch denkbar und möglich, dass der Hilfskraftantrieb 4 und der Hilfskraftantrieb 14 gleichartig ausgestaltet sind, wobei die Lenkwelle 11 nicht mechanisch mit dem Lenkrad 12 verbunden ist. Dadurch kann ein elektrisches Steer-by-Wire-Lenksystem realisiert sein, bei dem die Verlagerung der Zahnstange 3 durch elektrische Ansteuerung der Hilfskraftantrieb 4 und 14 erfolgt, die dann die Lenkungs-Stellantriebe bilden.

In einer Ausführungsvariante kann es vorgesehen sein, dass der Hilfskraftantrieb 14 weggelassen ist und die Hilfskraft lediglich durch den Hilfsantrieb 4 bereitgestellt wird. Ein solches Lenkgetriebe 2 ist in der Figur 2 dargestellt.

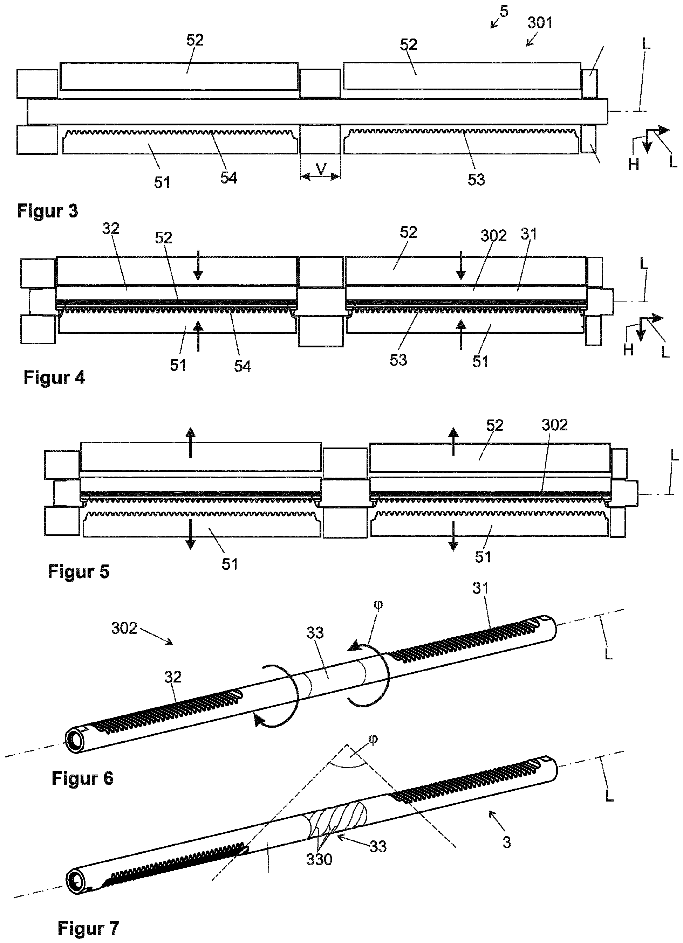

Das erfindungsgemäße Verfahren zur Herstellung einer Zahnstange 3 ist in den Figuren 3 bis 7 in einzelnen Verfahrensschritten dargestellt.

In Figuren 3 bis 5 ist ein Gesenk 5 gezeigt, welches zweiteilig ausgebildet ist mit einem Zahngesenkteil 51 - in der Darstellung unten - und einem Rückengesenkteil 52 - in der Darstellung oben -, welche die in einer dazwischen waagerecht durchgehenden Trennebene getrennte Gesenkform begrenzen.

Das Zahngesenkteil 51 weist zwei Zahnformteile 53, 54 auf, die axial um die Länge v des Verbindungsabschnitts 33 (siehe Figur 1) beabstandet sind.

Wie in Figur 3 gezeigt wird ein Rohling 301 - beispielsweise ein Rundprofil- oder Stangenabschnitt, bevorzugt aus Stahl, auf Umformtemperatur-je nach Verfahren auf eine Schmiedetemperatur beispielsweise zwischen 750° und 1250° - gebracht und zwischen den Gesenkteilen 51 und 52 positioniert, so dass die Längsachse L parallel zur Trennebene liegt.

Im nächsten Schritt wird das Gesenk 5 zum Ausführen des Gesenkschmiedens geschlossen, indem die Gesenkteile 51 und 52, wie in Figur 4 mit den Pfeilen angedeutet, in einer Höhenrichtung H senkrecht zur Trennebene gegeneinander bewegt werden. Dadurch werden die Zahnformteile 53 und 54 gleichzeitig in den Rohling 301 eingeformt, so dass dieser in einem Zahnformrohling 302 mit plastisch eingeformten Verzahnungsabschnitten 31 und 32 umgeformt wird.

Nach dem Öffnen des Gesenks 5 durch Auseinanderbewegen der Gesenkteile 51 und 52 - wie in Figur 5 mit den Pfeilen angedeutet - wird der Zahnformrohling 302 entnommen.

Figur 6 zeigt den Zahnformrohling 302 separat in perspektivischer Darstellung. Darin ist erkennbar, dass die Verzahnungsabschnitte 31 und 32 auf dem Umfang auf derselben Seite liegen - in der gezeigten Darstellung oben - und dabei relativ zueinander in einer unverdrehten Grundausrichtung positioniert sind, in der sie bezüglich Drehung um die Längsachse L unverdreht sind, d.h. in einem relativen Winkel von 0° zueinander stehen. Mit anderen Worten fluchten die Verzahnungsabschnitte 31 und 32 in Längsrichtung.

Anschließend erfolgt das erfindungsgemäße Verdrehen. Dazu werden die beiden Verzahnungsabschnitte 31 und 32 ausgehend von der Grundausrichtung gemäß Figur 6 mit einem relativen Torsionsmoment um die Längsachse L beaufschlagt, so dass sie um einen Winkelversatz ϕ gegeneinander verdreht werden. Dabei wird im Wesentlichen der Verbindungsabschnitt 33 um den besagten Winkelversatz ϕ plastisch verformt, d.h. in sich tordiert. Die beiden Verzahnungsabschnitte 31 und 32 bleiben beim Verdrehen plastisch unverformt.

Bevorzugt wird der Verbindungsabschnitt 33 vor dem Verdrehen, also in der Situation von Figur 6, auf eine geeignete Umformtemperatur vorgewärmt, so dass das Tordieren des Verbindungsabschnitts 33 als Warmumformung oder Halbwarmumformung erfolgt.

Die fertige Zahnstange 3, wie sie in Figur 1 in dem Lenkgetriebe 2 eingebaut ist, ist in Figur 7 gezeigt. Die beiden Verzahnungsabschnitte 31 und 32 haben einen Winkelversatz ϕ zueinander. In dem Verbindungsabschnitt 33 sind schematisch Gefügelinien 330 eingezeichnet, welche das beim Tordieren erzeugte Materialgefüge illustrieren sollen, die sich unterbrechungsfrei schraubenförmig über den warmumgeformten Verbindungsabschnitt 33 erstrecken.

### Bezugszeichenliste

- 1: Kraftfahrzeug-Lenksystem
- 10: Trageinheit
- 11: Lenkwelle
- 12: Lenkrad
- 13: Ritzel
- 14: Hilfskraftantrieb
- 15: Spurstangen
- 16: Rad
- 2: Lenkgetriebe
- 21: Gehäuse
- 3: Zahnstange
- 301: Rohling
- 302: Zahnstangenrohling
- 31: Verzahnungsabschnitt
- 32: Verzahnungsabschnitt
- 33: Verbindungsabschnitt
- 330: Gefügelinien
- 4: Hilfskraftantrieb
- 41: Antriebswelle
- 42: Ritzel
- 5: Gesenk
- 51: Gesenkteil (Zahngesenkteil)
- 52: Gesenkteil (Rückengesenkteil)
- 53, 54: Zahnformteile
- v: axiale Länge
- L: Längsachse
- H: Höhenrichtung
- ϕ: Winkelversatz

## Patentansprüche

1. Verfahren zur Herstellung einer Zahnstange (3) für ein Lenkgetriebe eines Kraftfahrzeugs, die eine in einer Längsrichtung axial erstreckte Längsachse (L) aufweist und die mindestens zwei sich axial erstreckende Verzahnungsabschnitte (31, 32) mit jeweils einer Verzahnung aufweist, wobei die Verzahnungsabschnitte (31, 32) axial über einen Verbindungsabschnitt (33) miteinander verbunden sind und bezüglich Rotation um die Längsachse (L) um einen definierten Winkelversatz (ϕ) relativ zueinander verdreht angeordnet sind,
**gekennzeichnet durch** die Schritte:
- Bereitstellen eines einstückigen Rohlings (301),
- Erzeugen der zwei Verzahnungsabschnitte (31, 32) an dem Rohling (301) in einer Grundausrichtung relativ zueinander,
- Verdrehen der Verzahnungsabschnitte (31, 32) relativ zueinander um die Längsachse (L), wobei der Verbindungsabschnitt (33) plastisch tordiert wird zur Erzeugung des Winkelversatzes (ϕ).

2. Verfahren nach Anspruch 1, **dadurch gekennzeichnet, dass** die Verzahnungsabschnitte (31, 32) in der Grundausrichtung relativ zueinander bezüglich der Längsachse (L) unverdreht sind.

3. Verfahren nach einem der vorangehenden Ansprüche, **dadurch gekennzeichnet, dass** durch das Verdrehen der Verzahnungsabschnitte (31, 32) ein Winkelversatz (ϕ) von mehr als 10° erzeugt wird.

4. Verfahren nach einem der vorangehenden Ansprüche, **dadurch gekennzeichnet, dass** durch das Verdrehen der Verzahnungsabschnitte (31, 32) ein Winkelversatz (ϕ) von mehr als 45° erzeugt wird.

5. Verfahren nach einem der vorangehenden Ansprüche, **dadurch gekennzeichnet, dass** zum Verdrehen die Verzahnungsabschnitte (31, 32) mit einem relativen Torsionsmoment oberhalb der Verformungsgrenze des Verbindungsabschnitts (33) beaufschlagt werden.

6. Verfahren nach einem der vorangehenden Ansprüche, **dadurch gekennzeichnet, dass** der Verbindungsabschnitt (33) eine axiale Länge (v) von weniger als 30% und/oder mehr als 2% der Zahnstangenlänge hat.

7. Verfahren nach einem der vorangehenden Ansprüche, **dadurch gekennzeichnet, dass** beim Verdrehen zusätzlich zum Winkelversatz (ϕ) ein Zuschlagwinkel aufgebracht wird, welcher einer elastischen Rückfederung des Verbindungsabschnitts (33) entspricht.

8. Verfahren nach einem der vorangehenden Ansprüche, **dadurch gekennzeichnet, dass** vor dem Verdrehen der Verzahnungsabschnitte (31, 32) der Verbindungsabschnitt (33) auf eine Umformtemperatur vorgewärmt wird.

9. Verfahren nach einem der vorangehenden Ansprüche, **dadurch gekennzeichnet, dass** mindestens ein Verzahnungsabschnitt (31, 32) durch Urformung und/oder Umformung erzeugt wird.

10. Verfahren nach einem der vorangehenden Ansprüche, **dadurch gekennzeichnet, dass** mindestens ein Verzahnungsabschnitt (31, 32) durch trennende Bearbeitung erzeugt wird.

11. Verfahren nach einem der vorangehenden Ansprüche, **dadurch gekennzeichnet, dass** vor, während oder nach dem Verdrehen die Verzahnungsabschnitte (31, 32) axial und/oder quer zur Längsachse (L) relativ zueinander ausgerichtet werden.

12. Verfahren nach einem der vorangehenden Ansprüche, **dadurch gekennzeichnet, dass** die Verzahnungsabschnitte (31, 32) unterschiedlich ausgebildet sind.

13. Verfahren nach einem der vorangehenden Ansprüche, **dadurch gekennzeichnet, dass** an der Zahnstange (3) mindestens ein weiterer Funktionsabschnitt umfasst ausgebildet oder angebracht wird.

14. Verfahren nach einem der vorangehenden Ansprüche, **dadurch gekennzeichnet, dass** der Rohling (301) als Stangen- oder Profilabschnitt bereitgestellt wird.

15. Zahnstange für ein Lenkgetriebe eines Kraftfahrzeugs, die eine in einer Längsrichtung axial erstreckte Längsachse (L) aufweist und mindestens zwei sich axial erstreckende Verzahnungsabschnitte (31, 32) mit jeweils einer Verzahnung aufweist, wobei die Verzahnungsabschnitte (31, 32) axial über einen Verbindungsabschnitt (33) miteinander verbunden sind und bezüglich Rotation um die Längsachse (L) um einen definierten Winkelversatz (ϕ) relativ zueinander verdreht angeordnet sind,
**dadurch gekennzeichnet,**
**dass** die Verzahnungsabschnitte (31, 32) und der Verbindungsabschnitt (33) einstückig ausgebildet sind, wobei der Verbindungsabschnitt (33) um die Längsachse (L) plastisch tordiert ausgebildet ist.

16. Zahnstange nach Anspruch 15, **dadurch gekennzeichnet, dass** die Zahnstange (3) nach einem Verfahren gemäß einem der Ansprüche 1 bis 14 hergestellt ist.

17. Lenkgetriebe (2) für ein Kraftfahrzeug, umfassend eine Zahnstange (3) mit einem ersten Verzahnungsabschnitt (31) und einem zweiten Verzahnungsabschnitt (32) nach einem der Ansprüche 15 bis 16, die axial in Längsrichtung verschiebbar in einem Getriebegehäuse (21) gelagert ist, wobei ein in dem Getriebegehäuse (21) drehbar gelagertes erstes Ritzel (13) in den ersten Verzahnungsabschnitt (31) eingreift und ein in dem Getriebegehäuse (21) drehbar gelagertes zweites Ritzel (42) in den zweiten Verzahnungsabschnitt (32) eingreift.

18. Kraftfahrzeug-Lenksystem (1) umfassend ein Lenkgetriebe (2) nach Anspruch 17.
